# DEMANDE DE BREVET EUROPEEN

(11) **EP 4 550 649 A1**
(43) Date de publication de la demande: **07.05.2025**
(21) Numéro de dépôt: 24210267.1
(22) Date de dépôt: 31.10.2024
(51) Int. Cl.: H02M 1/32, H02M 1/34, H02M 3/335

(54) **CONVERTISSEUR CONTINU-CONTINU À AMORTISSEMENT DE SURTENSION**

(30) Priorité: 03.11.2023 FR 2311948
(71) Demandeur: Safran Electrical & Power Chatou SAS, 78400 Chatou (FR)
(72) Inventeur: ABDESSELAM, Francis, 77550 MOISSY-CRAMAYEL (FR)
(74) Mandataire: Atout PI Laplace

(57) **Abrégé**

L'invention concerne un convertisseur continu/continu comprenant :
- un transformateur principal (20) dont un enroulement primaire (22) est raccordé en série avec un premier interrupteur électronique (24) entre deux points d'entrée (12, 14) du convertisseur continu/continu (10) et dont un enroulement secondaire (26) est raccordé en série avec un second interrupteur électronique (28) entre deux points de sortie (16, 18) du convertisseur continu/continu (10),
- un premier transformateur auxiliaire (30) dont un enroulement primaire (32), relié en série avec une première diode (34), est raccordé en parallèle de l'enroulement primaire du transformateur principal et dont un enroulement secondaire (36), relié en série avec une deuxième diode (38), est raccordé en parallèle de l'enroulement secondaire du transformateur principal et du second interrupteur électronique, les diodes sont raccordées de façon à laisser passer des surtensions apparaissant dans l'enroulement primaire du transformateur principal lors de l'ouverture du premier interrupteur électronique.

## Description

L'invention concerne un convertisseur continu-continu à découpage connu dans la littérature anglo-saxonne sous le nom de « Buck-boost converter ». Ce type de convertisseur convertit une tension continue en une autre tension continue de polarité inverse de plus faible ou plus grande valeur absolue. Il possède une inductance de stockage et un interrupteur électronique commandé raccordés en série à la tension d'entrée du convertisseur. Dans une phase de stockage, l'interrupteur est fermé et permet le stockage d'énergie dans l'inductance et dans une phase de restitution, l'énergie stockée dans l'inductance est reliée à une charge connectée en sortie du convertisseur.

Il est possible d'isoler galvaniquement ce type de convertisseur au moyen de deux inductances couplées formant un transformateur remplaçant l'inductance. Ce convertisseur isolé est connu dans la littérature anglo-saxonne sous le nom de « DC/DC flyback converter ».

En sortie de l'inductance ou en série avec le secondaire du transformateur, dans le cas d'un convertisseur isolé, on trouve un autre interrupteur électronique qui peut être un interrupteur électronique commandé pour réaliser un convertisseur bidirectionnel. Dans le cas d'un convertisseur monodirectionnel, l'interrupteur électronique peut être une diode ou un transistor à semi-conducteur à oxyde métallique connu dans la littérature anglo-saxonne sous le nom de transistor MOS pour son acronyme : « Metal-Oxide-Semiconductor ».

Les interrupteurs électroniques et l'inductance ou le transformateur présentent des éléments parasites, que l'on peut modéliser principalement par des capacités parasites reliées aux bornes, soit de chaque interrupteur, soit aux bornes de l'inductance ou de chaque enroulement du transformateur. Les fils de liaisons présentent également des inductances parasites. Lors de l'ouverture et de la fermeture des interrupteurs électroniques, les éléments parasites, inductances et capacités, tendent à générer des oscillations de tensions pouvant entrer en résonnance.

Il est notamment possible d'amortir certaines oscillations, par exemple en disposant aux bornes des interrupteurs un circuit de type résistance-condensateur-diode. L'énergie des oscillations est alors dissipée par la résistance de ce circuit. Cette solution entraine des pertes importantes. En effet, l'énergie dissipée est perdue et le rendement du convertisseur s'en trouve réduit.

L'invention vise à permettre une réduction des oscillations de tensions en limitant les pertes dues à l'amortissement des surtensions.

A cet effet, l'invention a pour objet un convertisseur continu-continu à isolement galvanique dans lequel l'énergie des surtensions générées en entrée du convertisseur est transférée vers la sortie du convertisseur.

Plus précisément l'invention a pour objet un convertisseur continu/continu comprenant :
- un transformateur principal dont un enroulement primaire et un premier interrupteur électronique forment un ensemble raccordé en série, cet ensemble étant raccordé entre deux points d'entrée du convertisseur continu/continu et dont un enroulement secondaire, et un second interrupteur électronique forment un ensemble raccordé en série, cet ensemble étant raccordé entre deux points de sortie du convertisseur continu/continu,
- un premier transformateur auxiliaire dont un enroulement primaire, et une première diode forment un ensemble raccordé en série, cet ensemble étant raccordé en parallèle de l'enroulement primaire du transformateur principal entre le point commun de l'enroulement primaire et du premier interrupteur électronique formant une première borne de l'enroulement primaire du transformateur principal et une seconde borne de l'enroulement primaire du transformateur principal et dont un enroulement secondaire, et une deuxième diode forment un ensemble raccordé en série, cet ensemble étant raccordé en parallèle de l'enroulement secondaire du transformateur principal et du second interrupteur électronique, la première diode et la deuxième diode sont raccordées de façon à laisser passer des surtensions apparaissant dans l'enroulement primaire du transformateur principal lors de l'ouverture du premier interrupteur électronique.

L'enroulement primaire du premier transformateur auxiliaire peut être raccordé partiellement en parallèle de l'enroulement primaire du transformateur principal la seconde borne de l'enroulement primaire du transformateur principal forme une borne intermédiaire de l'enroulement primaire du transformateur principal.

L'ensemble formé de l'enroulement secondaire du premier transformateur auxiliaire et de la seconde diode peut être raccordé partiellement en parallèle du second interrupteur électronique et de l'enroulement secondaire du transformateur principal en une borne intermédiaire de l'enroulement secondaire du transformateur principal.

Le convertisseur peut comprendre en outre un second transformateur auxiliaire dont un enroulement primaire et une troisième diode forment un ensemble raccordé en série, cet ensemble étant raccordé en parallèle de l'enroulement secondaire du transformateur principal entre le point commun de l'enroulement secondaire du transformateur principal et du second interrupteur électronique formant une première borne de l'enroulement secondaire du transformateur principal et une seconde borne de l'enroulement secondaire du transformateur principal, et dont un enroulement secondaire et une quatrième diode forment un ensemble raccordé en série, cet ensemble étant raccordé en parallèle de l'ensemble formé de l'enroulement primaire du transformateur principal et du premier interrupteur électronique raccordés en série, la troisième diode et la quatrième diode sont raccordées de façon à laisser passer des surtensions apparaissant dans l'enroulement secondaire du transformateur principal lors de l'ouverture du second interrupteur électronique.

L'enroulement secondaire du second transformateur auxiliaire peut être raccordé partiellement en parallèle du premier interrupteur électronique et de l'enroulement primaire du transformateur principal, la seconde borne de l'enroulement primaire du transformateur principal formant une borne intermédiaire de l'enroulement primaire du transformateur principal.

L'enroulement primaire du second transformateur auxiliaire peut être raccordé partiellement en parallèle de l'enroulement secondaire du transformateur principal, la seconde borne de l'enroulement secondaire du transformateur principal formant une borne intermédiaire de l'enroulement secondaire du transformateur principal.

L'invention sera mieux comprise et d'autres avantages apparaîtront à la lecture de la description détaillée d'un mode de réalisation donné à titre d'exemple, description illustrée par le dessin joint dans lequel :
la figure 1 représente un premier mode de réalisation d'un convertisseur continu/continu conforme à l'invention ;
la figure 2 représente un deuxième mode de réalisation d'un convertisseur continu/continu conforme à l'invention ;
la figure 3 représente un troisième mode de réalisation d'un convertisseur continu/continu conforme à l'invention ;
la figure 4 représente un quatrième mode de réalisation d'un convertisseur continu/continu conforme à l'invention ;

Par souci de clarté, les mêmes éléments porteront les mêmes repères dans les différentes figures.

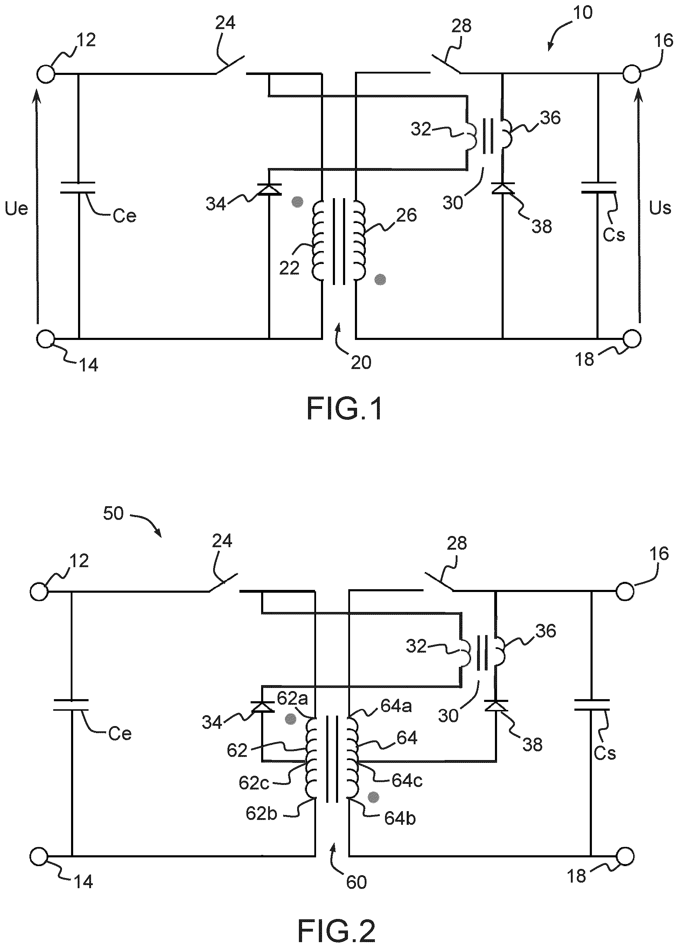

La figure 1 représente un convertisseur continu/continu 10. Le convertisseur 10 est configuré pour transformer une tension continue d'entrée Ue appliquée entre deux points d'entrée 12 et 14 du convertisseur 10 en une tension de sortie continue Us disponible entre deux points de sortie 16 et 18 du convertisseur 10. Le convertisseur 10 comprend un transformateur principal 20 disposé entre les points d'entrée 12 et 14 et les points de sortie 16 et 18 pour assurer l'isolation galvanique du convertisseur 10. Le transformateur principal 20 comprend un enroulement primaire 22 raccordé en série avec un premier interrupteur électronique 24. L'ensemble formé par l'enroulement primaire 22 et le premier interrupteur électronique 24 est raccordé entre les deux points d'entrée 12 et 14. De même, le transformateur principal 20 comprend un enroulement secondaire 26 raccordé en série avec un second interrupteur électronique 28. L'ensemble formé par l'enroulement secondaire 26 et le second interrupteur électronique 28 est raccordé entre les deux points de sortie 16 et 18. L'ouverture et la fermeture de l'interrupteur électronique 24 permet de générer, à partir de la tension Ue, un courant alternatif dans l'enroulement primaire 22, générant à son tour un courant alternatif dans l'enroulement secondaire 26. L'interrupteur électronique 28 permet de redresser le courant alternatif circulant dans l'enroulement secondaire 26 pour générer la tension continue Us.

Lorsque le convertisseur continu/continu 10 est monodirectionnel, le second interrupteur électronique 28 peut être une diode ou un transistor MOS. Le remplacement de cette diode ou de ce transistor MOS par un interrupteur électronique commandé permet au convertisseur continu/continu 20 de devenir bidirectionnel, ou plus précisément de convertir aussi bien de la tension Ue vers la tension Us que l'inverse. Les appellations primaire et secondaire sont alors purement arbitraires et permettent simplement de distinguer les deux enroulements 22 et 26 du transformateur principal 20.

Il est bien entendu qu'un convertisseur 20 peut comprendre d'autres composants électroniques en complément de ceux décrits plus haut qui forment les composants de base d'un convertisseur continu/continu de type « flyback » résonant, notamment un condensateur Ce mis en place entre les bornes d'entrée 12 et 14 et un condensateur Cs mis en place entre les bornes de sortie 16 et 18.

Selon l'invention, le convertisseur continu/continu 20 comprend un transformateur auxiliaire 30 dont un enroulement primaire 32 et une diode 34, raccordés en série, forment un ensemble raccordé en parallèle de l'enroulement primaire 22 entre le point commun de l'enroulement primaire 22 et de l'interrupteur 24 formant une première borne de l'enroulement primaire 22 et une seconde borne de l'enroulement primaire 22. Le transformateur auxiliaire 30 comprend aussi un enroulement secondaire 36, relié en série avec une diode 38 pour former un ensemble raccordé en parallèle de l'enroulement secondaire 26 et de l'interrupteur électronique 28.

En l'absence du transformateur auxiliaire 30, des surtensions apparaissant aux bornes de l'interrupteur 24 lors de son ouverture. Ces surtensions sont préjudiciables à l'interrupteur 24 et il est alors nécessaire de le dimensionner en conséquence. De plus, les surtensions entraînent des oscillations de tensions aux bornes de l'enroulement primaire 22 et par voie de conséquence aux bornes de l'enroulement secondaire 26. Ces oscillations peuvent entrer en résonnance à une fréquence fonction des capacités et inductances parasites présentes dans le convertisseur continu/continu 10 et principalement dans les composants situés du côté de l'enroulement primaire 22.

La présence du transformateur auxiliaire 30 permet d'amortir ces oscillations. L'amortissement des oscillations permet de réduire les perturbations électriques à l'entrée et à la sortie du convertisseur continu/continu 10. Plus précisément, afin de respecter certaines normes définissant un niveau de perturbations admissibles, il est souvent nécessaire de disposer à l'entrée et à la sortie du convertisseur continu/continu 10 des filtres comprenant notamment des composants passifs de type résistance, condensateur et inductance. La mise en oeuvre de l'invention permet de réduire notablement les dimensions de ces filtres pour respecter un niveau requis de perturbations électriques admissibles. Des essais en interne ont montré que la mise en oeuvre de l'invention permet de diviser entre cinq et dix la masse des filtres nécessaires. Il est également possible de réduire le niveau d'isolement du transformateur principal moins soumis à des surtensions.

La diode 34 est orientée de façon à ce que la surtension générée aux bornes de l'enroulement primaire 22 lors de l'ouverture de l'interrupteur électronique 24 soit évacuée vers le transformateur auxiliaire 32. Le sens de la diode est fonction du sens de la tension continue Ue. Plus précisément, la diode 34 ne permet pas le passage d'un courant lorsque l'interrupteur 24 est fermé. De même la diode 38 est orientée de façon à ce que la surtension générée aux bornes de l'enroulement secondaire 26 lors de l'ouverture de l'interrupteur électronique 28 soit évacuée vers la sortie du convertisseur continu/continu 10.

Sur la figure 1, la diode 34 est raccordée entre les enroulements primaires 22 et 32. Alternativement, il est possible de raccorder la diode 34 entre l'enroulement primaire 32 et l'interrupteur électronique 24. De même, la diode 38 peut être raccordée soit entre les enroulements secondaires 26 et 36, soit entre l'enroulement secondaire 36 et l'interrupteur électronique 28.

En complément de l'amortissement des oscillations, le transformateur auxiliaire 30 dirige l'énergie des oscillations vers la sortie du convertisseur continu/continu 10 en aval de l'interrupteur électronique 28. Ainsi l'énergie des oscillations n'est pas perdue et est utilisée dans la conversion de tension. Ceci permet d'améliorer le rendement du convertisseur continu/continu 10. Lorsqu'un condensateur Cs est présent, il stocke à la fois l'énergie provenant de l'enroulement secondaire 26 ainsi que l'énergie provenant de l'enroulement secondaire 36.

En pratique, lors d'essais en interne, de bons résultats ont été obtenus pour un transformateur auxiliaire 30 ayant une masse comprise entre 5 et 10% de la masse du transformateur principal 20.

Dans le convertisseur 10 représenté sur la figure 1, le transformateur auxiliaire 30 reçoit sur son enroulement primaire 32 la totalité de la tension présente aux bornes de l'enroulement primaire 22 lorsque la diode 34 est passante. La figure 2 représente un deuxième de mode de réalisation d'un convertisseur continu/continu 50 dans lequel la tension reçue par l'enroulement primaire du transformateur auxiliaire est réduite, ce qui permet de réduire le dimensionnement du transformateur auxiliaire 30.

Plus précisément, le convertisseur continu/continu 50 comprend, comme le convertisseur 10, les deux interrupteurs électroniques 24 et 28 connectés avec un transformateur principal 60 qui diffère du transformateur principal 20 en ce qu'il possède une prise intermédiaire sur chacun de ses enroulements. Plus précisément, le transformateur principal 60 comprend un enroulement primaire 62 s'étendant entre deux bornes d'extrémité 62a et 62b. L'enroulement primaire 62 comprend en outre une borne intermédiaire 62c.

Dans le convertisseur continu/continu 50, on retrouve le transformateur auxiliaire 30 dont l'enroulement primaire 32 est raccordé en série avec la diode 34. L'ensemble formé par l'enroulement primaire 32 et la diode 34 est raccordé entre la borne intermédiaire 62c et la borne d'extrémité 62a raccordée à l'interrupteur électronique 24. Comme précédemment, la diode 34 peut être raccordée en amont ou en aval de l'enroulement secondaire 36.

Ainsi les surtensions apparaissant aux bornes de l'enroulement primaire 62 lors de l'ouverture de l'interrupteur 24 sont en partie amorties dans le transformateur auxiliaire 30 en traversant la diode 34 et l'enroulement primaire 32 du transformateur auxiliaire 30. La fait de raccorder l'ensemble formé par la diode 34 et l'enroulement primaire 32 à la borne intermédiaire 62c plutôt qu'à la borne d'extrémité 62b comme dans le mode de réalisation de la figure 1 permet de limiter la surtension vue par le transformateur auxiliaire 30.

Le transformateur principal 60 comprend un enroulement secondaire 64 s'étendant entre deux bornes d'extrémité 64a et 64b. L'enroulement secondaire 64 comprend en outre une borne intermédiaire 64c. L'ensemble formé par l'enroulement secondaire 36 et la diode 38 est raccordé entre un ensemble raccordé en série et formé par l'interrupteur électronique 28 et la partie de l'enroulement secondaire situé entre la borne intermédiaire 64c et la borne d'extrémité 64a. Comme précédemment, la diode 38 peut être raccordée en amont ou en aval de l'enroulement secondaire 36.

Sur la figure 2, le transformateur principal 60 comprend deux bornes intermédiaires 62c, à son enroulement primaire 62, et 64c, à son enroulement secondaire 64. En fonction des valeurs de tensions présentes et notamment du rapport de conversion du convertisseur continu/continu 50, il est possible de ne prévoir qu'une seule des bornes intermédiaires, soit 62c, soit 64c. Dans ce cas, le transformateur principal du convertisseur continu/continu est hybride entre le transformateur principal 20 et le transformateur principal 60. Les raccordements des ensembles formés d'une part par l'enroulement primaire 32 et la diode 34 et d'autre part par l'enroulement secondaire 36 et la diode 38 sont réalisés en conséquence, soit selon le mode de réalisation représenté sur la figure 1, soit selon le mode de réalisation représenté sur la figure 2.

Les modes de réalisation représentés à l'aide des figures 1 et 2 sont bien adaptés à une conversion dans le sens de Ue vers Us. Autrement dit, les convertisseurs continu/continu 10 et 50 sont monodirectionnels. Il est également possible de mettre en oeuvre l'invention dans des convertisseurs bidirectionnels.

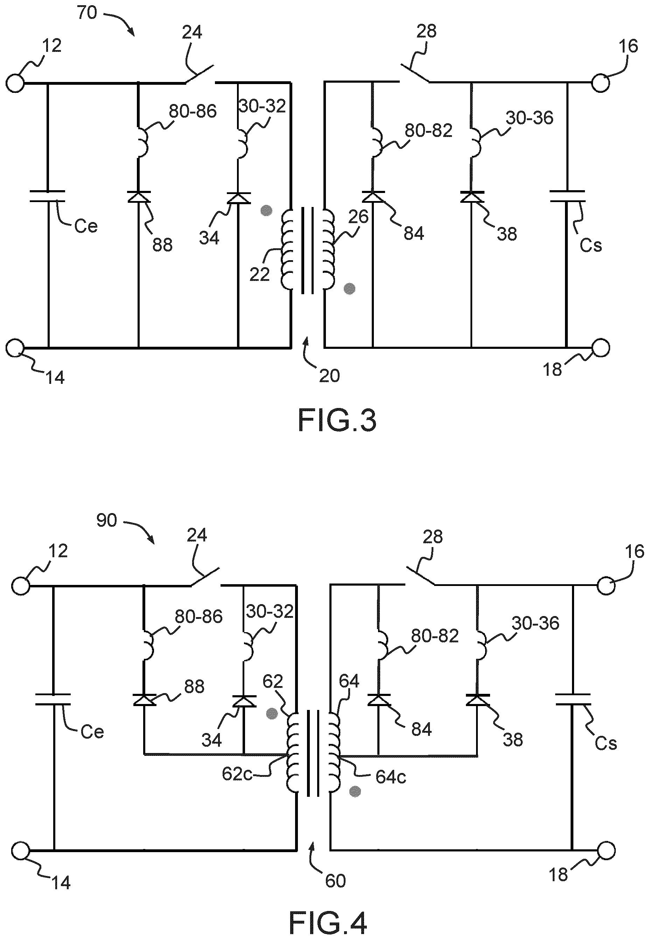

La figure 3 représente un convertisseur continu/continu 70 sans borne intermédiaire dans lequel on retrouve le transformateur principal 20 dont l'enroulement primaire 22 est raccordé en série avec l'interrupteur électronique 24 et dont l'enroulement secondaire 26 est raccordé en série avec l'interrupteur électronique 28. On retrouve également le transformateur auxiliaire 30 dont l'enroulement primaire 32 est associé à la diode 34 et dont l'enroulement secondaire 36 est associé à la diode 38. Pour ne pas surcharger la figure 3, les enroulements primaire 32 et secondaire 36 du transformateur auxiliaire 30 sont représentés à distance. Leur couplage n'apparait pas sur la figure 3. Il est bien entendu que le fonctionnement est identique à celui décrit à l'aide de la figure 1.

La présence du transformateur auxiliaire 30 permet de faire transiter l'énergie de surtensions présentes aux bornes de l'enroulement primaire 22 vers le condensateur Cs s'il est présent, c'est dire de la gauche vers la droite sur la figure 3. En complément, le convertisseur continu/continu 70 comprend un second transformateur auxiliaire 80 permettant de faire transiter l'énergie de surtensions présentes aux bornes de l'enroulement secondaire 26 vers le condensateur Ce s'il est présent, c'est dire de la droite vers la gauche sur la figure 3.

Le transformateur auxiliaire 80 comprend un enroulement primaire 82 raccordé en série avec une diode 84 et l'ensemble formé par l'enroulement primaire 82 et la diode 84 est raccordé en parallèle de l'enroulement secondaire 26 du transformateur principal 20. De même, le transformateur auxiliaire 80 comprend un enroulement secondaire 86 raccordé en série avec une diode 88 et l'ensemble formé par l'enroulement secondaire 86 et la diode 88 est raccordé en parallèle de l'ensemble formé par l'enroulement primaire 22 du transformateur principal 20 et l'interrupteur électronique 24. De façon plus générale, les transformateurs auxiliaires 30 et 80 et leurs diodes respectives 34, 38 d'une part et 84, 88 d'autre part sont raccordés de façon complètement symétrique en inversant la gauche et la droite par rapport au transformateur principal 20 sur la figure 1.

En pratique, les appellations primaire et secondaire sont arbitraires, notamment pour le transformateur principal 20. L'énergie électrique peut passer essentiellement de l'enroulement primaire 22 vers l'enroulement secondaire 26 ou inversement. L'énergie de surtensions présentes aux bornes de l'enroulement primaire 22 est amortie et dirigée vers les points 16 et 18. De même L'énergie de surtensions présentes aux bornes de l'enroulement secondaire 26 est amortie et dirigée vers les points 12 et 14.

Comme pour la figure 2 où la transformateur principal 60 comprend des bornes intermédiaires 62c et 64c sur lesquels sont raccordés respectivement les primaire 32 et secondaire 36 du transformateur auxiliaire 30, il est également possible de prévoir un convertisseur continu/continu 90 bidirectionnel, représenté sur la figure 4, équipé du transformateur principal 60 et des deux transformateurs auxiliaires 30 et 80. A la différence du convertisseur continu/continu 70, dans le convertisseur continu/continu 90, les transformateurs auxiliaires 30 et 80 associés à leurs diodes respectives 34, 38 d'une part et 84, 88 d'autre part sont raccordés respectivement aux bornes intermédiaires 62c et 64c. Le raccordement est réalisé de façon symétrique en inversant la droite et la gauche de la figure 2 par rapport au transformateur principal 60.

Comme précédemment, il est possible de ne prévoir qu'une seule des bornes intermédiaires soit 62c, soit 64c. Dans ce cas, le transformateur principal est hybride entre le transformateur principal 20 et le transformateur principal 60.

## Revendications

1. Convertisseur continu/continu comprenant :
- un transformateur principal (20 ; 60) dont un enroulement primaire (22 ; 62) et un premier interrupteur électronique (24) forment un ensemble raccordé en série, cet ensemble étant raccordé entre deux points d'entrée (12, 14) du convertisseur continu/continu (10 ; 50) et dont un enroulement secondaire (26 ; 64), et un second interrupteur électronique (28) forment un ensemble raccordé en série, cet ensemble étant raccordé entre deux points de sortie (16, 18) du convertisseur continu/continu (10 ; 50),
- un premier transformateur auxiliaire (30) dont un enroulement primaire (32), et une première diode (34) forment un ensemble raccordé en série, cet ensemble étant raccordé en parallèle de l'enroulement primaire (22 ; 62) du transformateur principal (20 ; 60) entre le point commun de l'enroulement primaire (22 ; 62) et du premier interrupteur électronique (24) formant une première borne (62a) de l'enroulement primaire (22 ; 62) du transformateur principal (20 ; 60) et une seconde borne (62b ; 62c) de l'enroulement primaire (22 ; 62) du transformateur principal (20 ; 60) et dont un enroulement secondaire (36), et une deuxième diode (38) forment un ensemble raccordé en série, cet ensemble étant raccordé en parallèle de l'enroulement secondaire (26 ; 64) du transformateur principal (20 ; 60) et du second interrupteur électronique (28), la première diode (34) et la deuxième diode (38) sont raccordées de façon à laisser passer des surtensions apparaissant dans l'enroulement primaire (22 ; 62) du transformateur principal (20 ; 60) lors de l'ouverture du premier interrupteur électronique (24).

2. Convertisseur selon la revendication 1, dans lequel l'enroulement primaire (32) du premier transformateur auxiliaire (30) est raccordé partiellement en parallèle de l'enroulement primaire (62) du transformateur principal (60), la seconde borne de l'enroulement primaire (62) du transformateur principal (60) forme une borne intermédiaire (62c) de l'enroulement primaire (62) du transformateur principal (60).

3. Convertisseur selon l'une des revendications précédentes dans lequel l'ensemble formé de l'enroulement secondaire (36) du premier transformateur auxiliaire (30) et le seconde diode (38) est raccordé partiellement en parallèle du second interrupteur électronique (28) et de l'enroulement secondaire (64) du transformateur principal (60) en une borne intermédiaire (64c) de l'enroulement secondaire (64) du transformateur principal (60).

4. Convertisseur selon l'une des revendications précédentes, comprenant en outre un second transformateur auxiliaire (80) dont un enroulement primaire (82) et une troisième diode (84) forment un ensemble raccordé en série, cet ensemble étant raccordé en parallèle de l'enroulement secondaire (26 ; 64) du transformateur principal (20 ; 60) entre le point commun de l'enroulement secondaire (26 ; 64) du transformateur principal (20 ; 60) et du second interrupteur électronique (28) formant une première borne (64a) de l'enroulement secondaire (26 ; 64) du transformateur principal (20) et une seconde borne (64b ; 64c) de l'enroulement secondaire (26 ; 64) du transformateur principal (20), et dont un enroulement secondaire (86) et une quatrième diode (88) forment un ensemble raccordé en série, cet ensemble étant raccordé en parallèle de l'ensemble formé de l'enroulement primaire (22 ; 62) du transformateur principal (20 ; 60) et du premier interrupteur électronique (24) raccordés en série, la troisième diode (84) et la quatrième diode (88) sont raccordées de façon à laisser passer des surtensions apparaissant dans l'enroulement secondaire (24 ; 64) du transformateur principal (20 ; 60) lors de l'ouverture du second interrupteur électronique (28).

5. Convertisseur selon la revendication 4, dans lequel l'enroulement secondaire (86) du second transformateur auxiliaire (80) est raccordé partiellement en parallèle du premier interrupteur électronique (24) et de l'enroulement primaire (62) du transformateur principal (60), la seconde borne de l'enroulement primaire (62) du transformateur principal (60) formant une borne intermédiaire (62c) de l'enroulement primaire (62) du transformateur principal (60).

6. Convertisseur selon l'une des revendications 4 ou 5, dans lequel l'enroulement primaire (82) du second transformateur auxiliaire (80) est raccordé partiellement en parallèle de l'enroulement secondaire (64) du transformateur principal (60), la seconde borne de l'enroulement secondaire (64) du transformateur principal (60) formant une borne intermédiaire (64c) de l'enroulement secondaire (64) du transformateur principal (60).
